# EUROPÄISCHE PATENTSCHRIFT

(11) **EP 0 569 394 B1**
(45) Veröffentlichungstag und Bekanntmachung des Hinweises auf die Patenterteilung: **27.12.1995**
(21) Anmeldenummer: 92902913.0
(22) Anmeldetag: 22.01.1992
(51) Int. Cl.: H04N 5/60, H04B 1/16, H04L 27/22

(54) **FERNSEH- ODER RUNDFUNKEMPFÄNGER MIT EINEM NICAM- ODER DAB-DECODER**
TV OR BROADCAST RECEIVER WITH A NICAM OR DAB DECODER
RECEPTEUR DE TELEVISION OU DE RADIODIFFUSION AVEC UN DECODEUR NICAM OU DAB

(30) Priorität: 31.01.1991 DE 4102859
(43) Veröffentlichungstag der Anmeldung: 18.11.1993
(73) Patentinhaber: Deutsche Thomson-Brandt GmbH, 78003 Villingen-Schwenningen (DE)
(72) Erfinder: MACAREE, John, Patrick, Danbury, Essex CM3 4LD (GB); EILTS-GRIMM, Klaus, D-2120 Lüneburg (DE)
(74) Vertreter: Einsel, Robert, Dipl.-Ing.
(86) Internationale Anmeldenummer: EP9200125
(87) Internationale Veröffentlichungsnummer: WO9214337

(56) Entgegenhaltungen:
- EP-A- 0 120 786
- WO-A-89/04576
- DE-A- 3 842 411
- GB-A- 2 238 213

## Beschreibung

NICAM (Near Instantaneous Companded Audio Multiplex) ist ein digitales Tonübertragungsverfahren, daß den Fernsehton mit hoher Qualität und Zuverlässigkeit Stereofon überträgt. Dieses Verfahren wird ausfürlich beschrieben in: "NICAM Digital Stereo", Electronics and Wireless World; August und September 89; "NICAM 3 Near-Instantaneously Companded digital transmission system for high quality sound programmes; The radio and electronics ingeneer, Vol.50; British Broadcasting Corporation: Specification of a Standart for UK Stereo-with-Television Transmissions, September 1986.

DAB (=Digital Audio Broadcasting, "DAB" ist ein Warenzeichen der TELEFUNKEN Fernseh und Rundfunk GmbH) ist eine Kurzbezeichnung für den digitalen terrestrischen Hörfunk, der im Rahmen des europäischen Forschungsvorhabens EUREKA 147-DAB entwickelt wird. DAB ist in Grundzügen aus "Funkschau" Heft 8, 1990, Teil: Funkschau Spezial, Seiten 9 - 18 beschrieben.

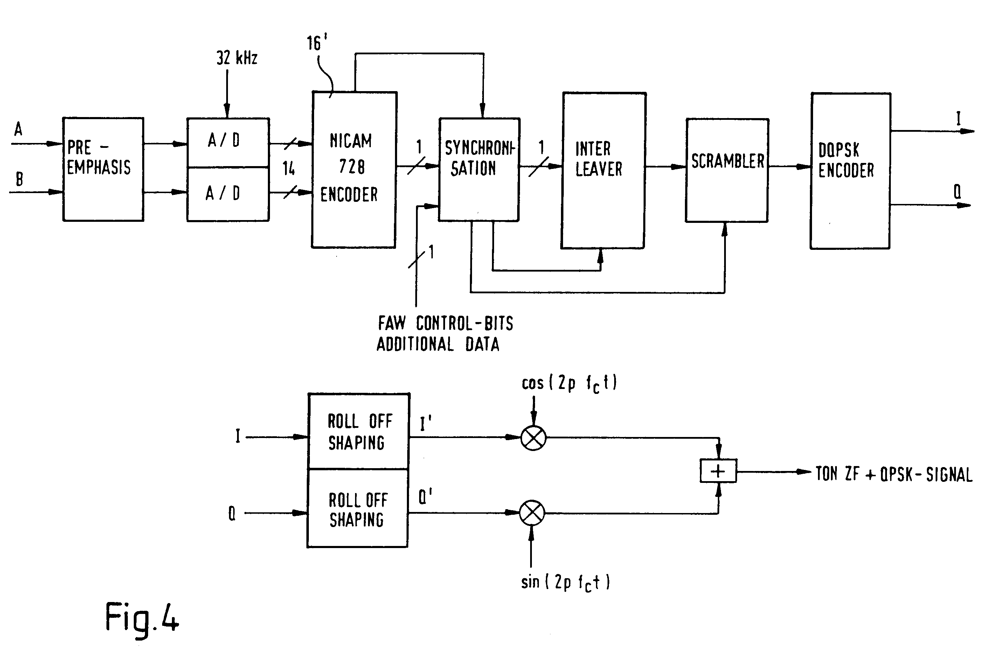

Ohne alle Einzelheiten der Systeme NICAM oder DAB aufzuzeigen, wird nachfolgend insbesondere das Modulationsverfahren des NICAM Tonträgers beschrieben, das dem bei DAB verwendeten Modulationsverfahren sehr ähnlich ist. Zur Übertragung auf einem bandbegrenzten Kanal wird sendeseitig in einem NICAM Encoder ein serieller Datenstrom mittels des Vier-Quadranten-Phasendifferenz-Modulation-(DQPSK)-Verfahrens (Differential Quadrature Phase Shift Keying) codiert und moduliert (Fig. 4). Dieses Modulationsverfahren ist ein bandbreitenbegrenztes Modulationsverfahren und bringt einen verhältnismäßig einfachen Aufbau der Demodulatoren im Rundfunk-Empfänger mit sich. Statt der speziellen DQPSK oder QPSK bezieht sich die Erfindung auf alle PSK-Modulationverfahren, also auch auf z.B. 2-PSK, 8-PSK usw., welche auch bei DAB-diskutiert werden. PSK wird nachfolgend auch als Überbegriff für die verschiedenen Formen dieser Modulationsart verwendet.

Sendeseitig werden in einem DAB-oder NICAM- bzw. DQPSK-Encoder jeweils 2 Bits des seriellen Datenstroms zu einem Dibit (= Symbol, Baud) zusammengefaßt. Die vier Kombinationsmöglichkeiten eines Dibit (00, 01, 10, 11) resultieren in einer Drehung (Phase Shift) eines (komplexen) Zeigers um 0. -90, -270, bzw. 180 Grad.

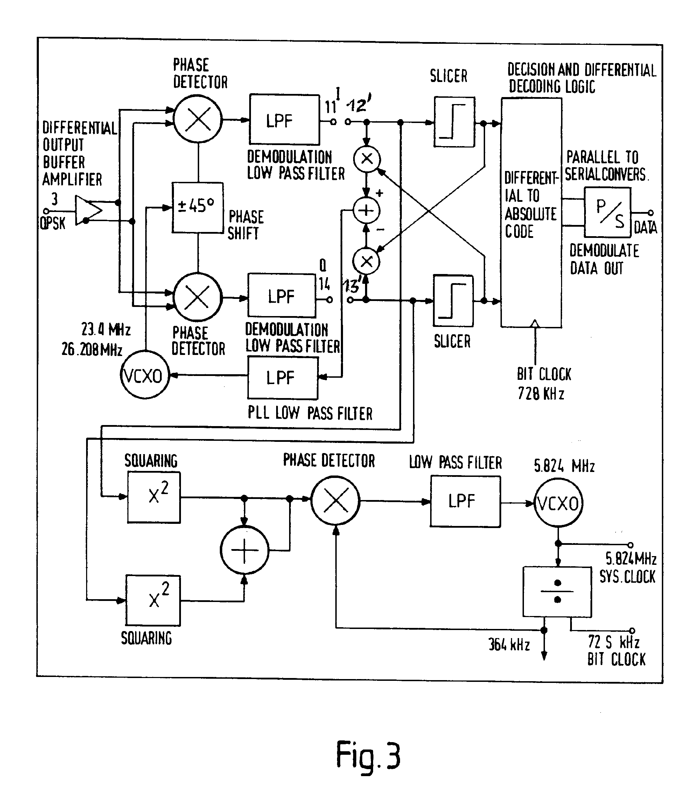

Die aktuelle Zeigerpostion wird mittels der Ko-ordinaten I und Q (s. Fig. 3 und 4) ausgedrückt. Sie wechselt mit der Symbolrate, welche der halben Datenrate entspricht. Bei NICAM 728 mit einer Datenrate von 728 kBit ist dies 728/2 = 364 kBaud/s. Bei DAB sind je nach Verwendung unterschiedliche Datenraten vorgesehen. Im Empfänger kann der Datenstrom einem invers zum Encoder aufgebauten DAB- oder NICAM-Decoder, der einen DAB- oder NICAM-Demodulator enthält, eindeutig zurückgewonnen werden, indem man lediglich die Phasendifferenz zweier Symbolzeitpunkte ermittelt und ihr nach obiger Vorschrift ein Dibit zuordnet. Das Signalpaar I und Q wird anschließend jeweils einem Tiefpass zugeführt. Er bestimmt die Bandbreite und die spektrale Form des zu übertragenen Audiosignals im Übertragungskanal (Spectrum Shaping).

Auf der Empfängerseite wird ein möglichst identisches Filter eingesetzt (Fig. 3). Die resultierende Bandbreite und ihre spektrale Form wird durch den sogenannten Roll-Off-Faktor in einer formelmäßigen Darstellung des Tiefpasses ausgedrückt. In diesem Faktor unterscheiden sich die NICAM-Systeme nach I und B/G Standard.

Im Modulator wird sendeseitig das gefilterte Signalpaar I und Q mittels Modulation mit zwei zueinander in Quadratur stehenden Trägern in die Ton-ZF-Lage gebracht. Hier kann es zum restlichen aus Bild- und FM-mono Signal bestehenden Spektrum addiert werden und deren Summe anschließend in VHF bzw. UHF-Lage gebracht werden. Im Empfänger wird in einem entsprechenden Decoder bzw. im Demodulator das Signalpaar I und Q bzw. die Tondaten wiedergewonnen.

Der Erfindung liegt die Aufgabe zugrunde, bei einem Fernseh- oder Rundfunkempfänger der eingangs genannten Art, beim Empfang eines digital codierten PSK-modulierten Audiosignals eine qualitativ hochwertiges Audio-Signal an den Rundfunk-Lautsprechern zur Verfügung zu stellen.

Gemäß der Erfindung wird diese Aufgabe mit den Merkmalen nach Anspruch 1 gelöst. Vorteilhafte Weiterbildungen sind in den Unteransprüchen beschrieben.

Mittels der Erfindung wird eine für sich bekannte Schwundregelung oder Schwundregelschaltung für den DAB- oder NICAM-Tonträger verwendet, wobei die Regelspannungsgröße für den regelbaren Zf-Verstärker aus dem nPSK- oder QPSK- oder DQPSK-Demodulator gewonnen wird.

Bei der Schwundregelung in einem Fernsehempfänger ist es bekannt (DE-A-31 44 097), aus der Amplitude des Videosignals eine Regelspannung zu gewinnen und damit die Verstärkung des ZF-Verstärkers so zu regeln, daß das Videosignal eine von der Empfangsfeldstärke weitestgehend unabhängige, konstante Amplitude hat. Derartige Schwundregelschaltungen werden auch als AGC (Automatic-Gain-Control) bezeichnet. Die Regelspannung kann bekannterweise z.B. aus dem Videosignal durch Spitzengleichrichtung oder Mittelwertbildung in einem Siebglied gewonnen werden.

Vorzugsweise wird erfindungsgemäß die Regelspannungsgröße durch die Ausgänge I und Q der Demodulationsfilter des PSK-Demodulators zur Verfügung gestellt. Dazu wird das Signalpaar Q und I einer geeigneten Schaltung im PSK-Demodulator zugeführt, an deren Ausgang die der Regelspannung entsprechenden Größen I und Q oder I exp2 und Q exp2 abgreifbar sind.

Mittels der Erfindung wird eine deutliche Tonqualität-Verbesserung erreicht, wobei durch die Rückführung des Signalpaars Q und I in überraschend einfacher Weise eine effektive Lösung von Ton- Bild-problemen in einem Fernsehempfänger erreicht wird. Außerdem wirkt sich das Vorhandensein anderer möglicher Signale, insbesondere analoger Signale, nicht störend auf die Verstärkungsregelung aus, so daß die gesamte Schwundregelung sehr stabil und störunanfällig ist.

Nachfolgend wird die Erfindung anhand zeichnerisch dargestellter Ausführungsbeispiele näher erläutert. In der Zeichnung stellen dar:
- Fig. 1: Eine Anordnung einer Schwundregelschaltung im Signalweg zum NICAM-Demodulator
- Fig. 2: Eine Realisierungsmöglichkeit der Schwundregelschaltung
- Fig. 3: Die interne Archtektur eines NICAM-QPSK-Demodulators
- Fig. 4: Ein Blockschaltbild eines NICAM-Encoders
- Fig. 5: Ein Blockschaltbild eines NICAM-Decoders
- Fig .6: Ein Blockschaltbild einer Schwundregelung im DAB-Signalweg

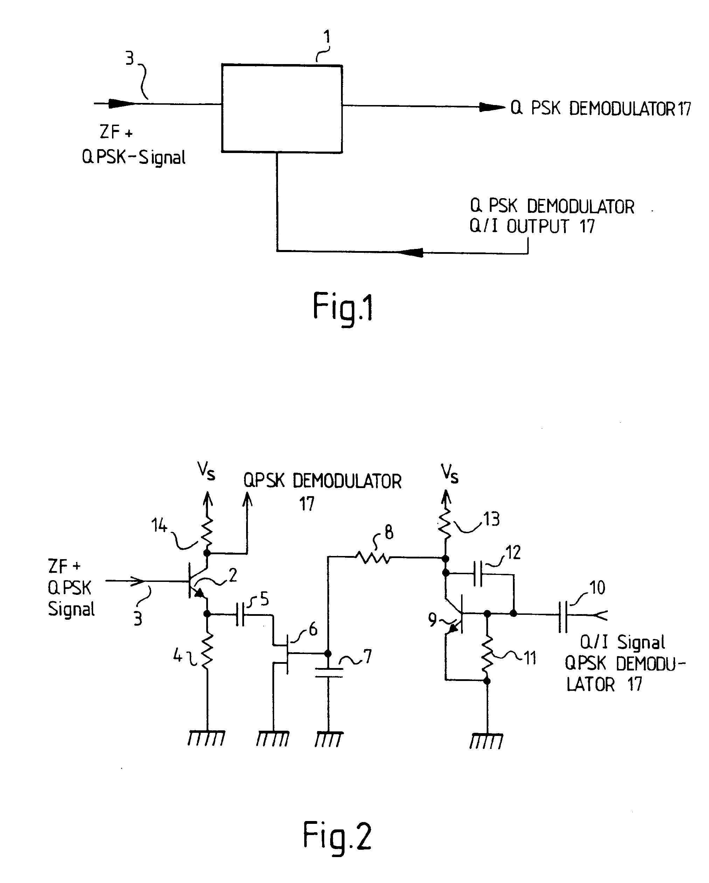

Fig. 1 zeigt ein Blockschaltbild aus einem Fernsehempfänger, bei dem im Signalweg des NICAM-Tonträgers ein regelbare Verstärkungsstufe 1 "Gain Control Stage" angeordnet ist, deren Ausgang mit dem QPSK-Eingang eines NICAM-QPSK-Demodulator 17 (hier MAS7A101 NICAM-QPSK-Demodulator) verbunden ist.

Eine Realisierungsmöglichkeit der schaltbaren Verstärkungsstufe 1 nach Fig. 1 ist in Fig. 2 gezeigt. Über einen Transistor 2 wird das Zwischenfrequenzsignal 3, das die QPSK Signale Q und I vom Q/I-Ausgang des Demodulators 17 enthält, verstärkt. Diese Verstärkung wird im Sinne eines AGC geregelt. Dazu muß die Verstärkung dieser Stufe geändert werden. Dies ist durch eine Verschiebung des Arbeitspunktes der Basis des Transistors 2, aber auch durch eine Gegenkopplung möglich. Eine Möglichkeit dazu ist es, mit dem Widerstand 4 die Gegenkopplung zu realisieren. Wenn die Gegenkopplung verändert wird, wird auch die Verstärkung entsprechend geändert. Ein Kondensator 5, der wie der Widerstand 4 mit dem Emitter des Transistors 2 verbunden ist, dient ebenfalls zur Gegenkopplung, jedoch nur für hohe Frequenzen. Die hohen Frequenzen werden über einen Feldeffekttransistor 6 zugeführt, dessen Sourceelektrode mit den Kondensator 5 verbunden ist. Der Drain-Anschluß des Feldeffekttransistors ist geerdet. Der Gate-Eingang des Feldeffekttransistors ist mit einem Kondensator 7 verbunden, der ebenfalls geerdet ist. Außerdem ist die Gateelektrode über einen Widerstand 8 mit dem Emitter eines Transistors 9 verbunden.

Ist der FET stromlos, so ist der Kondensator 5 praktisch abgeklemmt vom Emitter des Transistors 2. Die Gegenkopplung ist dann maximal und die Verstärkung minimal. Der Kollektor des Transistors 2 ist mit einem Widerstand 14 verbunden, an dem eine Versorgungsspannung VS anliegt. Außerdem bildet der Kollektor des Transistors 2 den Ausgang der Schwundregelschaltung und ist mit dem bzw. den Eingängen des QPSK-Demodulators (Fig. 3; Pin 3, 12′ und 13′) verbunden. Es wird also nur für hohe Frequenzen die Gegenkopplung geändert.

Um die Signale vom Q/I-Ausgang des QPSK-Demodulators entsprechend für die Schwundregelschaltung aufzubereiten, wird das Signalpaar Q und I vom Ausgang Q (Pin 14 in Fig. 3) und I (Pin 11 in Fig. 3) des NICAM QPSK Demodulators 17 zuerst einem Kondensator 10, wie in Fig. 2 gezeigt, zugeführt. Der Kondensator ist mit der Basis des Transistors 9, mit einem Widerstand 11 und einem weiteren Kondensator 12 verbunden. Der Widerstand 11 ist geerdet ebenso wie der Emitter des Transistors 9. Der Kollektor des Transistors 9 ist mit dem Kondensator 12, mit dem Widerstand 8 und einem weiteren Widerstand 13 verbunden, an dem die Versorgungsspannung VS anliegt.

Wie das Signalpaar Q und I im QPSK-Demodulator gewonnen wird, zeigt die Fig. 3. Diese zeigt die interne Architektur eines NICAM-QPSK-Demodulators 17, hier MAS7A101. Der QPSK Subcarrier-Demodulator nach Fig. 3 besteht aus einem Eingangs-Verstärker mit zwei Ausgängen, einem Switch-Type Vervielfacher, einem spannungsgesteuerte Kristalloszillator und einem 90° Phasen(ver)schieber. Der Kristalloszillator schwingt auf der vierfachen QPSK-Ziwschenträgerfrequenz z.B. 26.408 MHz im System I und 23.4 MHz im System B/G-Systeme (z.B. Deutschland, Skandinavien).

Die demodulierten Daten werden einem Nyquist-Filter zugeführt, der eine 100 % Roll-Off-Antwort bei einem System B und G vorsieht. Nach Phasendedektierung und Tiefpassfilterung steht das Signalpaar Q und I an den Ausgängen 11 und 14 des Demodulators an. Die Ausgängewerte von Q und I oder Q² und I² sind wie oben beschrieben zur automatischen Verstärkungsregelung 1 auf den Eingang einer entsprechenden Schwundregelschaltung wie in Fig. 2 gezeigt, zurückgeführt.
Die gleichen Daten gehen auch über die Eingänge 12′ und 13′ in den Entscheidungs- und Bit-clock Rückgewinnungsblock des Demodulators nach Fig. 3.

Fig. 4 zeigt einen sendeseitigen NICAM Encoder. Zur Signalrückgewinnung ist im Rundfunkempfänger ein entsprechender NICAM-Decoder 16 vorgesehen, der z.B. den NICAM-QPSK-Demodulator nach Fig. 3 enthält oder diesem nachgeschaltet ist.

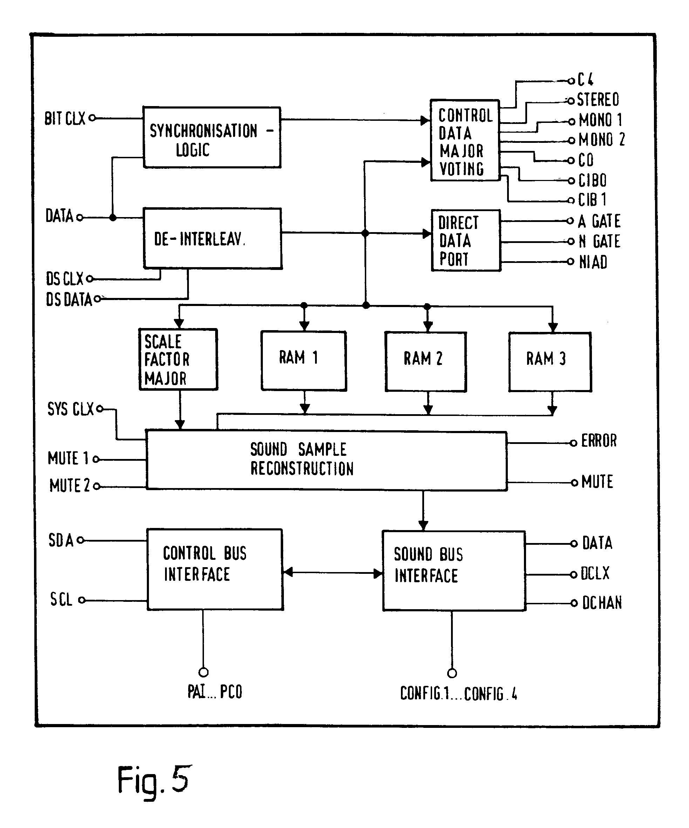

Die in einem NICAM-System verwendeten Hilfsträger werden im Tuner- und IF-Demodulatorteil eines Fernsehgerätes regeniert. Das Hilfsträgersianal wird dann auf das NICAM-Modul geschaltet, das für die drei Funktionen QPSK-Demodulation, NICAM-Decodierung und D-A-Wandlung verantwortlich ist. Im Demodulatorblock wird der serielle Bit-Strom vom modulierten Trägersignal getrennt. Je nach Frequenz werden dazu verschiedene Demodulationsfilter eingesetzt. Von FM-Signalen und Bildträgern verursachtes Rauschen sowie die Anzahl der möglichen Bit-Fehler hängt entscheidend von der Qualität des Filteraufbaus ab. Der demodulierte Datenstrom gelangt im Anschluß an die Filterung auf den NICAM-Decoder MAS7D102, der genau die umgekehrte Funktion wie der Transmitter bzw. Encoder ausführt. Den inneren Aufbau des NICAM-Decoders MAS7D102 zeigt Fig.5. Die decodierten Daten vom Decoder gelangen zu einem an den Decoder angepaßten Wandler (MAS7A103), der die D-A-Wandlung vornimmt. Alle drei spezifischen NICAM-Bausteine können auch zusammen mit der AGC-Regelschaltung 1 in einem Baustein intergriert werden.

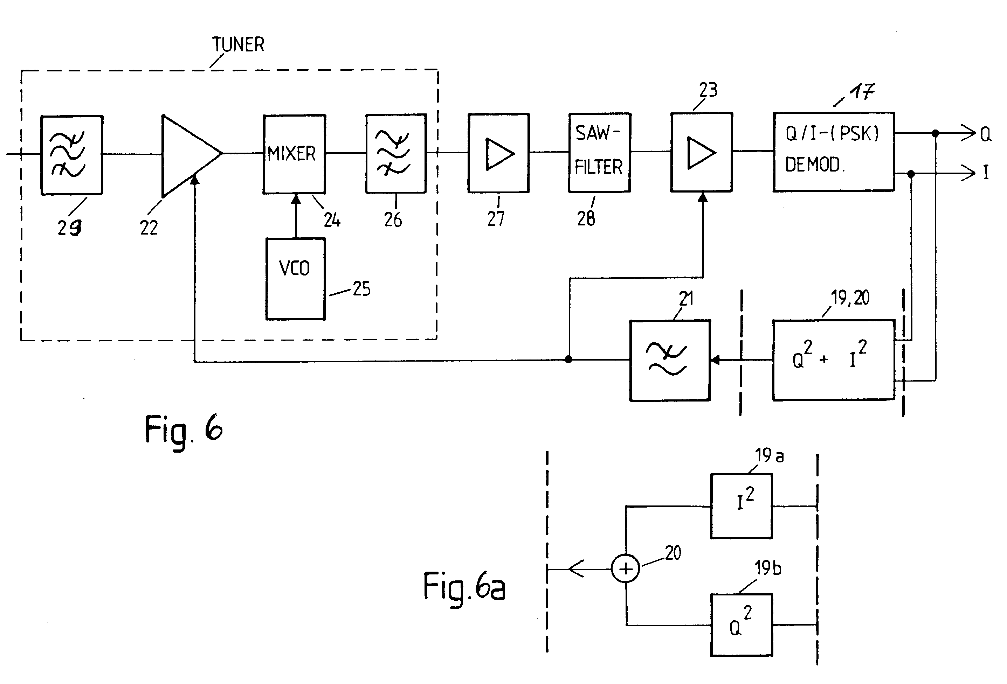

Fig. 6 zeigt die erfindungsgemäße Schwundregelung für eine Anwendung in einem DAB-Empfänger, bei dem die Signale vom I- und Q-Ausgang des QPSK-Demodulators 17 zunächst je einem Quadrierer 19a und 19b, anschließend einem Addierer 20 und danach einem Tiefpass 21 zugeführt werden. Mit der so gewonnenen Regelspannung (I² + Q²) wird dann eine zweifache oder zweistufige Schwundregelung durchgeführt, wobei die erste AGC-Stufe 22 der Schwundregelung im Tuner und die zweite AGC-Stufe 23 ähnlich wie bei vorstehend beschriebenem NICAM-Beispiel zwischen dem Tuner und dem Demodulator vorgesehen ist.

Die dem Tuner zugeführten digitalen Rundfunksignale werden zunächst einem Bandpaß 29 zugeführt und dann einem Berücksichtigung der Regelspannungsgröße I² + Q² in einem Verstärker 22, der ersten AGC-Stufe, verstärkt. Vom Ausgang des Verstärkers 22 wird das verstärkte Signal auf einen Eingang eines Mischers 24 geführt, der seinerseits durch einen VCO 25 (Voltage Controlled Oszillator) gesteuert wird. Das Ausgangssignal des Mischers 24 wird nachfolgend nacheinander in einem weiteren Bandpass 26, einem Verstärker 27 und einem SAW-Filter 27 (Surface Acustic Wave - Oberflächenfilter) und dann der zweiten AGC-Stufe 23 zugeführt. Der Ausgang der zweiten AGC-Stufe ist mit dem Dateneingang des PSK-Demodulators verbunden.

Statt der beiden Quadrierer 19a und 19b und dem Addierer 20 kann auch eine einzige Schaltung 19,20 vorgesehen werden, die die Funktion der Quadrierer 19a, 19b und des Addierers 20 (siehe Fig. 6a) übernimmt.

## Patentansprüche

1. Fernseh- oder Rundfunkempfänger mit ZF-Verstärkermitteln (1, 23) mit automatischer Verstärkungsregelung und nachfolgenden, einen Tonsignal-Demodulator enthaltenden Signaldemodulator-Mitteln, wobei der Tonsignal-Demodulator ein Digitalsignal-Demodulator (17, 19, 19a, 19b, 20) zum Empfang eines PSK-oder QPSK- oder DQPSK-Signales ist, **dadurch gekennzeichnet,** daß die automatische Verstärkungsregelung für die ZF-Verstärkermittel (1, 23) und die automatische Verstärkungs-Regelung einer Abstimmeinheit oder eines Tuner-Verstärkers (22) aus dem Ausgangssignal oder den Ausgangssignalen (I, Q) des Digitalsignal-Demodulators abgeleitet (17, 19, 19a, 19b, 20) ist.

2. Fernseh- oder Rundfunkempfänger nach Anspruch 1, **dadurch gekennzeichnet,** daß der Digitalsignal-Demodulator (17, 19, 19a, 19b, 20) ein NICAM- oder DAB-Demodulator ist.

3. Fernseh- oder Rundfunkempfänger nach Anspruch 1 oder 2, **dadurch gekennzeichnet,** daß der Digitalsignal-Demodulator (17, 19, 19a, 19b, 20) zwei Quadratur-Träger-Ausgangssignale (I, Q) hat, die für die Bildung des Verstärkungs-Regelsignals jeweils quadriert (19a, 19b) und aufsummiert (20) werden.

## Claims

1. A television or radio receiver with intermediate frequency amplifier means (1, 23) having automatic regulation of the amplification and, subsequently, signal demodulator means containing an audio signal demodulator, in which the audio signal demodulator is a digital signal demodulator (17, 19, 19a, 19b, 20) for receiving a PSK or QPSK or DQPSK signal, **characterised in that** the automatic regulation of amplification for the intermediate frequency amplifier means (1, 23) and for the automatic regulation of amplification of a tuner unit or a tuner-amplifier (22) is derived from the output signal or signals (I, Q) of the digital signal demodulator (17, 19, 19a, 19b, 20).

2. A television or radio receiver according to claim 1, **characterised in that** the digital signal demodulator (17, 19, 19a, 19b, 20) is a NICAM or DAB demodulator.

3. A television or radio receiver according to claim 1 or 2, **characterised in that** the digital signal demodulator (17, 19, 19a, 19b, 20) has two quadrature carrier output signals (I, Q) which are each squared (19a, 19b) and summed (20) in order to form the regulating signal for the amplification.

## Revendications

1. Récepteur de télévision ou de radiodiffusion comportant des moyens d'amplification F.I. (1, 23) avec réglage automatique du gain et des moyens de démodulation du signal comprenant un démodulateur du signal audio, où ledit démodulateur du signal audio est un démodulateur de signaux numériques (17, 19, 19a, 19b, 20) permettant de recevoir un signal PSK, QPSK ou DQPSK, **caractérisé en ce** que le réglage automatique du gain pour les moyens d'amplification F.I. (1, 23) et le réglage automatique du gain d'une unité d'accord ou d'un amplificateur d'accord (22), est obtenu à partir du signal de sortie ou des signaux de sortie (I, Q) du démodulateur de signaux numériques (17, 19, 19a, 19b, 20).

2. Récepteur de télévision ou de radiodiffusion selon la revendication 1 **caractérisé en ce** que ledit démodulateur de signaux numériques (17, 19, 19a, 19b, 20) est un démodulateur NICAM ou DAB.

3. Récepteur de télévision ou de radiodiffusion selon l'une quelconque des revendications 1 ou 2 **caractérisé en ce** que ledit démodulateur de signaux numériques (17, 19, 19a, 19b, 20) fournit deux signaux de sortie de porteuse en quadrature (I, Q) qui sont tous les deux élevés au carré (19a, 19b) et additionnés (20) pour former le signal de réglage du gain.
